# FASCICULE DE BREVET EUROPEEN

(11) **EP 0 611 540 B1**
(45) Date de publication et mention de la délivrance du brevet: **26.02.1997**
(21) Numéro de dépôt: 94420051.8
(22) Date de dépôt: 14.02.1994
(51) Int. Cl.: A47J 27/08

(54) **Dispositif de verrouillage-déverrouillage à mâchoires d'un couvercle sur une cuve**
Klauenverriegelung zum Halten eines Topfdeckels
Lid locking device with ring segmented, claw clamps

(30) Priorité: 15.02.1993 FR 9301961
(43) Date de publication de la demande: 24.08.1994
(73) Titulaire: SEB S.A., F-69130 Ecully (FR)
(72) Inventeur: Cartigny, Michel, F-21310 Mirebeau (FR)

(56) Documents cités:
- WO-A-92/03080
- DE-B- 1 006 133
- DE-U- 8 905 111
- FR-A- 785 438
- GB-A- 613 802

## Description

La présente invention se rapporte au domaine technique général des dispositifs de fermeture d'un couvercle sur une cuve pour former un récipient de cuisson, de préférence sous pression.

La présente invention concerne un dispositif de verrouillage-déverrouillage d'un couvercle sur une cuve pour former un récipient de cuisson, de préférence sous pression, comportant des mâchoires de verrouillage montées mobiles et espacées le long de la circonférence du récipient, lesdites mâchoires étant susceptibles d'être soumises à l'action de moyens de déverrouillage pour leur faire quitter leur position de verrouillage du couvercle sur la cuve.

On connaît déjà d'après la demande de brevet DE-A-4026166, des dispositifs de verrouillage-déverrouillage de récipients de cuisson sous pression mettant en oeuvre des mâchoires montées mobiles dans le couvercle selon une direction radiale. Les mâchoires, au nombre de deux, sont diamétralement opposées dans le corps du couvercle et destinées à venir enserrer dans leur position de fermeture le bord périphérique de la cuve. La commande du déplacement des mâchoires est assurée par un dispositif de commande actionné par un bouton, ledit dispositif étant monté mobile dans une position centrale sur le couvercle, selon l'axe de symétrie du récipient. Le dispositif de commande est pourvu de surfaces d'engagement spécialement conformées pour agir lors du déplacement du bouton de commande, sur des surfaces inclinées solidaires des mâchoires afin de les déplacer radialement. Un tel système de commande transforme donc un mouvement axial en un mouvement radial de déplacement des mâchoires selon une position de fermeture ou d'ouverture.

Il peut être considéré qu'un tel système apporte une contribution positive à l'amélioration des systèmes de fermeture des récipients de cuisson sous pression, notamment en ne nécessitant pas un positionnement relatif précis entre le couvercle et la cuve en début de fermeture. En revanche un tel système s'avère mettre en oeuvre une série de pièces mobiles relativement pour assurer la commande et le déplacement des mâchoires. L'agencement global, le coût et la fiabilité de fonctionnement de la solution proposée ne constituent donc pas une solution optimale.

En outre, il doit également être noté que la position centrale du bouton de commande peut être considérée comme un facteur influençant négativement la sécurité générale des appareils conçus selon ce principe, dans la mesure où l'utilisateur peut être tenté de l'utiliser comme un moyen de préhension voire même de transport du récipient. Dans un tel cas l'utilisateur risque d'actionner par mégarde le dispositif d'ouverture des mâchoires.

Enfin, il y a également lieu de remarquer que la mécanique de commande proposée implique de la part de l'utilisateur, un effort de commande bi-directionnel relativement important.

L'objet de l'invention vise en conséquence à porter remède aux divers inconvénients énumérés précédemment, et à proposer un nouveau dispositif de verrouillage-déverrouillage à mâchoire, dont la conception est particulièrement simplifiée, ne nécessitant pas d'indexage de position entre le couvercle et la cuve, et ne requérant de la part de l'utilisateur que des gestes de commande simples sans effort, tout en procurant une sécurité maximale.

Un autre objet de l'invention vise à fournir un dispositif de verrouillage-déverrouillage capable d'assurer à l'utilisateur une sécurité importante en empêchant toute ouverture inopinée.

Un autre objet de l'invention vise à proposer un dispositif de verrouillage-déverrouillage particulièrement dimensionné de manière à répartir de façon homogène l'ensemble des forces mécaniques résultant de la pression de vapeur nécessaire à la cuisson.

Un objet complémentaire de l'invention vise à proposer un dispositif de verrouillage-déverrouillage ne nécessitant de la part de l'utilisateur qu'un seul type de geste de commande facilement mémorisable.

Un autre objet de l'invention vise à proposer un nouveau couvercle de cuve, plus particulièrement mais non exclusivement destinée à être mise en oeuvre avec le dispositif de verrouillage-déverrouillage proposé, le couvercle étant particulièrement conçu pour résister à toutes déformations importantes, et ce malgré une conception simplifiée.

Les objets assignés à l'invention sont atteints à l'aide d'un dispositif de verrouillage-déverrouillage d'un couvercle sur une cuve pour former un récipient de cuisson, de préférence sous pression, comportant des mâchoires de verrouillage montées mobiles et espacées le long de la circonférence du récipient, lesdites mâchoires étant destinées à occuper une position de verrouillage relatif du couvercle et de la cuve, et des moyens de déverrouillage susceptibles d'agir sur les mâchoires pour leur faire quitter leur position de verrouillage caractérisé en ce qu'il comporte:
- au moins deux mâchoires montées élastiquement mobile selon une direction radiale en considérant l'axe de symétrie x-x' du récipient, par l'intermédiaire d'un moyen de rappel entre une position fixe de déverrouillage à l'encontre du moyen de rappel et une position de rappel correspondant à leur position de verrouillage,
- un moyen de blocage des mâchoires dans leur position fixe, ledit moyen étant escamotable pour occuper une position de déblocage dans laquelle les mâchoires sont soumises librement à l'action du moyen de rappel,
- un moyen de déclenchement apte à agir sur le moyen de blocage pour lui faire occuper sa position de déblocage.

D'autres particularités et avantages de l'invention apparaîtront et ressortiront plus en détail à la lecture de la description faite ci-après en référence aux dessins annexés, donnés à titre d'exemples illustratifs et non limitatifs dans lesquels :
- La Figure 1 montre selon une vue en perspective, un autocuiseur pourvu d'un dispositif de verrouillage-déverrouillage conforme à l'invention.
- La Figure 2 montre selon une vue éclatée analogue à celle de la figure 1, les éléments principaux d'un dispositif de verrouillage-deverrouillage conforme à l'invention.
- La Figure 3 montre, selon une coupe transversale longitudinale une première variante de réalisation d'un dispositif de verrouillage-déverrouillage conforme à l'invention monté dans une poignée de cuve, ledit dispositif étant en position de déverrouillage.
- La Figure 4 montre selon une coupe transversale longitudinale identique à celle de la figure 3, un dispositif de verrouillage-déverrouillage conforme à l'invention, en position de verrouillage des mâchoires sur le couvercle et la cuve d'un récipient.
- La Figure 5 montre la variante de réalisation montrée aux figures 3 et 4, selon une coupe transversale.
- La Figure 6 montre selon une coupe transversale longitudinale, une autre variante de réalisation d'un dispositif de verrouillage-déverrouillage conforme à l'invention.
- La Figure 7 montre selon une coupe transversale, un couvercle de cuve utilisable avec un dispositif de verrouillage-déverrouillage à mâchoires conforme à l'invention.
- Les Figures 8a et 8b montrent selon des coupes transversales longitudinales partielles des poignées, la position de verrouillage des mâchoires, respectivement juste après fermeture, et en condition d'utilisation du récipient de cuisson sous pression.

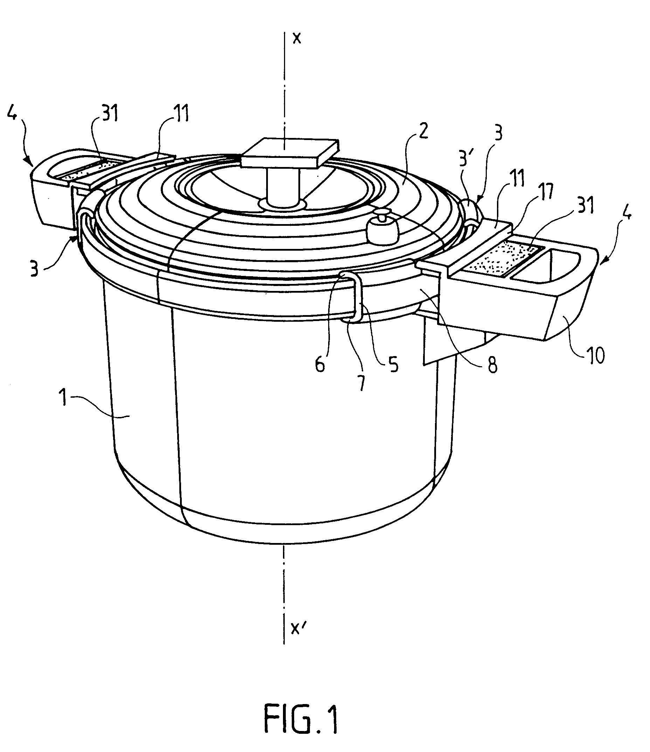

Le dispositif de verrouillage-déverrouillage conforme à l'invention est destiné à être intégré de préférence dans un récipient de cuisson sous pression tel que montré par exemple à la figure 1 pour constituer un autocuiseur.

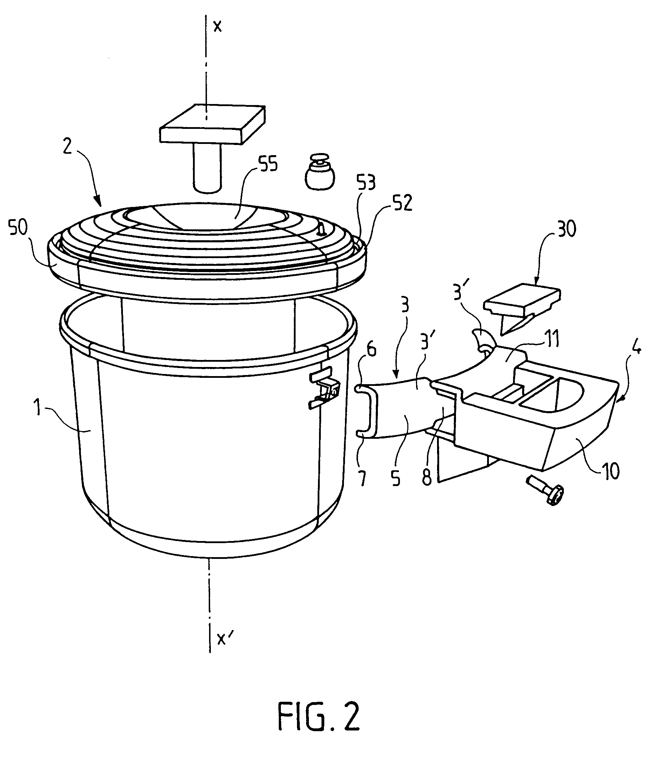

Le récipient sous pression montré aux figures 1 et 2, du genre autocuiseur, comporte de manière classique une cuve 1, par exemple cylindrique, sur laquelle est destinée à être rapporté de manière étanche, par exemple par l'intermédiaire d'un joint d'étanchéité, un couvercle 2.

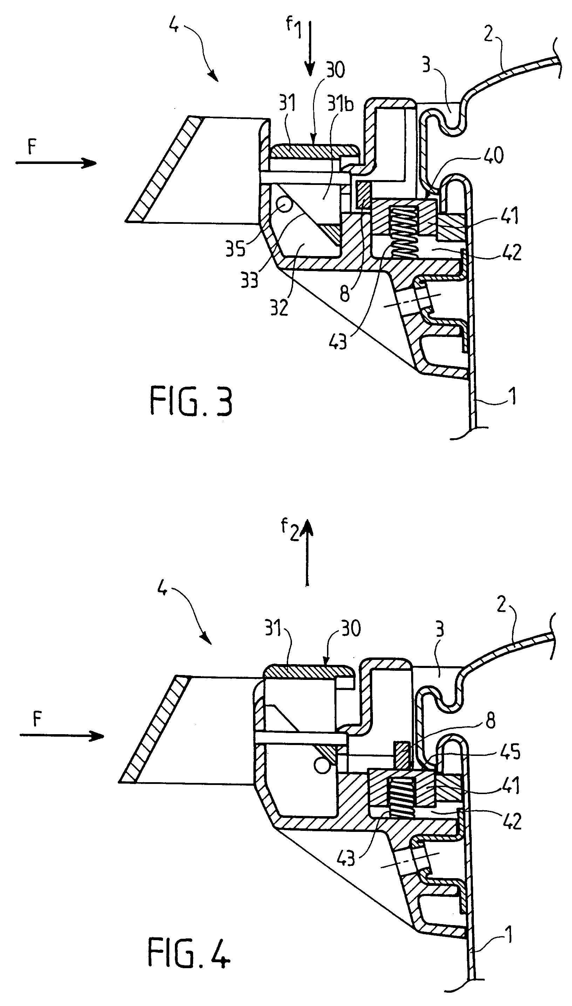

Dans l'exemple de réalisation préférentiel montré aux figures 1 et 2, le récipient sous pression est pourvu de deux mâchoires de verrouillage 3 solidaires de la cuve 1 par l'intermédiaire de poignées 4 dans lesquelles elles sont intégrées. Les mâchoires 3 sont montées de préférence diamétralement opposées le long de la circonférence du récipient en considérant l'axe de symétrie x-x' du récipient. Les mâchoires 3 sont destinées à venir occuper une position de verrouillage montrée à la figure 1 dans laquelle elles assurent un verrouillage relatif du couvercle 2 et de la cuve 1. Les mâchoires 3 présentent en conséquence une forme générale en arc de cercle s'étendant sur une portion de la longueur de la circonférence du récipient, assimilable dans le cas présent à un secteur de longueur déterminée. Chaque mâchoire 3 présente au moins sur un segment de longueur 3' et de préférence sur deux segments de longueur 3', une face 5 sensiblement parallèle aux parois du récipient, ladite face 5 se terminant, avantageusement à sa partie supérieure par un premier rebord rentrant 6 dirigé vers le centre du récipient et destiné à venir en appui sur le couvercle 2 pour assurer le verrouillage. Dans la variante de réalisation préférentielle de l'invention, telle que celle montrée à la figure 2, les mâchoires 3 comportent un second rebord rentrant 7 dirigé également vers le centre du récipient, de manière à définir des segments 3' de section transversale sensiblement en U. Avantageusement, les segments 3' sont disposés aux deux extrémités de chaque mâchoire 3 et reliés entre eux par une barrette de liaison 8, de section transversale par exemple en forme de rectangle (figures 3 et 4) et constituant un prolongement des faces 5.

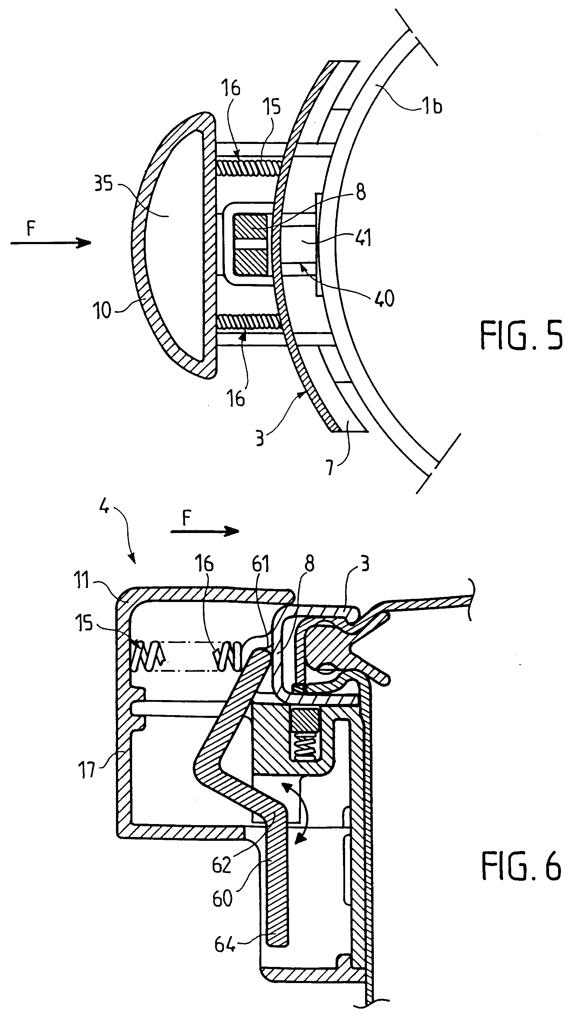

Les poignées 4 comportent une anse de préhension 10 solidaire d'un boîtier de montage 11 et sont destinées à être fixées, dans l'exemple de réalisation préférentielle de l'invention, sur la paroi de cuve 1,par tous moyens appropriés connus de l'homme de l'art, et par exemple par l'intermédiaire d'un étrier de fixation 12. (Figure 2). Le boîtier de montage 11 définit un logement présentant une section transversale sensiblement en forme de U à l'intérieur de laquelle chaque mâchoire 3 est montée élastiquement mobile selon une direction radiale en considérant l'axe de symétrie x-x' du récipient, par l'intermédiaire d'un moyen de rappel élastique 15 (figures 5 et 6) entre une position fixe de déverrouillage à l'encontre du moyen de rappel 15 et une position de rappel correspondant à la position de verrouillage des mâchoires 3. Dans l'exemple de réalisation montré à la figure 5, le moyen de rappel élastique 15 est constitué d'au moins un, et de préférence deux ressorts de compression 16 interposés entre une cloison centrale 17 du boîtier 11 et la face 5 ou la barrette de liaison 8 des mâchoires 3. Les ressorts de compression 16 exercent ainsi en permanence sur chaque mâchoire 3 une force de rappel F dirigée radialement vers le centre du récipient et tendant à mettre en mouvement chaque mâchoire 3 dans cette même direction pour venir occuper leur position de verrouillage. Bien évidemment, tout moyen de rappel élastique équivalent peut être utilisé, tel que des ressorts à lames par exemple.

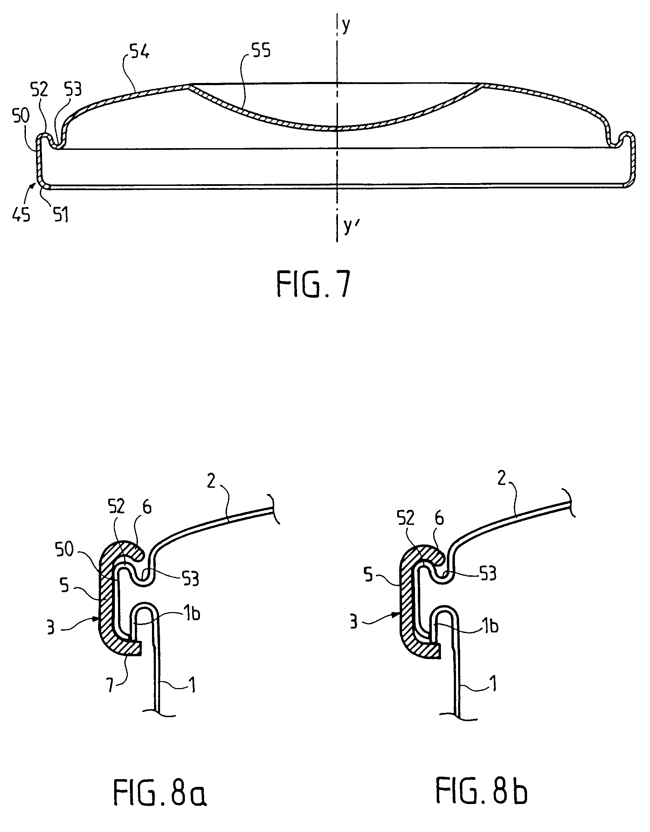

Dans leur position de verrouillage telle que montrée à la figure 8, les segments 3' viennent en appui par leur face 5 contre le bord périphérique du couvercle 2, et viennent enserrer par le premier bord rentrant 6 et le second bord rentrant 7, respectivement le couvercle 2 et la cuve 1.

Le dispositif de verrouillage-déverrouillage conforme à l'invention comporte également des moyens de déverrouillage 30 (figures 3, 4 et 5) comprenant au moins un organe de commande 31 apte à amener les mâchoires 3 hors de leur position de verrouillage tel que montré à la figure 4, pour leur faire occuper leur position fixe de déverrouillage tel que montré à la figure 3. L'organe de commande 31 peut être constitué avantageusement, par un bouton poussoir destiné à être actionné par les doigts de l'utilisateur et monté à coulissement libre, selon des directions f1, f2 parallèles à l'axe x-x', dans un logement 32 ménagé dans chaque poignée 4. Le bouton poussoir est pourvu à sa partie inférieure d'une partie active en forme de coin 31b assimilable à un pêne définissant une face inclinée 33 tournée vers l'extérieur du récipient. Les moyens de déverrouillage 30 comprennent également un étrier 35 solidaire par ses deux bras latéraux de la barrette de liaison 8 et s'étendant dans le logement 32. La partie en forme de coin 31b et l'étrier 35 sont positionnés relativement dans le logement 32 , pour que lors du coulissement de l'organe de commande 31 de sa position haute montrée à la figure 4 à la position basse de déverrouillage montrée à la figure 3 selon la direction f1, la partie en forme de coin 31b vient progressivement engager l'âme centrale de l'étrier 35. Au cours du déplacement de l'organe de commande dans la direction f1, sensiblement normale au sens de déplacement F des mâchoires, la face inclinée 33 en appui contre l'âme de l'étrier 35 repousse progressivement l'étrier 35 selon une direction opposée à la force de rappel F. Lorsque l'organe de commande 31 atteint sa position basse de déplacement (figure 3), les mâchoires 3 ont donc été repoussées à l'encontre de la force de rappel F générée par les moyens de rappel 16, et occupent leur position fixe de déverrouillage. Dans cette position montrée à la figure 5, les mâchoires 3 s'étendent à distance des parois de la cuve 1 et sont retenues dans cette position fixe à l'aide d'un moyen de blocage 40 agissant sur lesdites mâchoires 3. Le moyen de blocage 40 est logé dans le boîtier 11 et est monté escamotable de manière à occuper une position de blocage des mâchoires dans laquelle ces dernières sont dans leur position de déverrouillage, ainsi qu'une position de déblocage dans laquelle les mâchoires 3 sont soumises librement à l'action du moyen de rappel 15. Avantageusement, le moyen de blocage 40, associé à chaque mâchoire 3, comporte une pièce de butée 41 montée élastiquement mobile selon une direction normale au sens de déplacement des mâchoires 3, ladite butée étant montée dans un évidement 42 ménagé dans le boîtier de montage 11 et dont l'ouverture s'étend sous ou dans le plan d'extension inférieur des mâchoires 3. La pièce de butée 41, constituée par exemple d'une pièce plastique ou métallique est montée mobile à l'encontre d'un ressort de compression 43 interposé entre le fond de l'évidement 42 et la face inférieure de la pièce de butée 41 de manière à soumettre en permanence ladite pièce 41 à une force de rappel forçant la pièce de butée 41 à occuper une position active de blocage en partie hors de l'évidement 42. La pièce de butée 41, et l'évidement 42 sont avantageusement disposés dans la partie centrale du boîtier de montage 11 de telle manière que la pièce de butée 41, dans sa position en partie hors de l'évidement 42, vienne constituer par l'une de ses faces, une surface de blocage de la barrette de liaison 8. Dans la position de blocage de la pièce de butée 41, chaque mâchoire 3 est maintenue en position de déverrouillage, à distance des parois du récipient à l'encontre de la force de rappel F. Dans la position de déblocage de la pièce de butée 41, correspondant à un escamotage de ladite pièce dans l'évidement 42, chaque mâchoire 3 est librement soumise à l'action centripète de la force de rappel radiale F et peut ainsi recouvrir l'ouverture de l'évidement 42 ainsi que la pièce de butée 41.

Le dispositif de verrouillage-déverrouillage conforme à l'invention comprend également un moyen de déclenchement apte à agir sur les moyens de blocage 40 pour leur permettre d'occuper leur position de déblocage induisant le déplacement des mâchoires 3 dans leur position de verrouillage. De manière préférentielle le moyen de déclenchement est constitué par le couvercle 2 qui comporte à cet effet un bord périphérique bombé 45 (figures 4 et 7) dont l'extrémité est destinée à engager lors de la fermeture du récipient, la face supérieure de la butée 41 pour permettre sa compression et son déplacement dans l'évidement 42. Il est bien évident que d'autres moyens de déclenchement sont envisageables, et en particulier des moyens de déclenchement indépendants du couvercle 2, et montés par exemple directement sur chaque poignée 4.

Le dispositif de verrouillage-déverrouillage conforme à l'invention est plus particulièrement destiné à être mis en oeuvre et associé avec un couvercle 2 de forme adaptée à celle de la cuve 1 circulaire par exemple, comportant une jupe périphérique cylindrique 50 se terminant à sa partie inférieure par le bord périphérique 45 formant une lèvre rentrante 51 dont la courbure est conjuguée à celle du second bord rentrant 7 des mâchoires 3 (figures 7, 8a, 8b). La jupe périphérique 50 comporte à sa partie supérieure un bord roulé 52 présentant sa convexité tournée vers l'extérieur. Le bord roulé 52 se poursuit en direction de l'axe de symétrie y-y' du couvercle 2, par un roulage périphérique 53 formant une rainure dans le couvercle dont la concavité est tournée vers l'extérieur dudit couvercle. La courbure du bord roulé 52 est réalisée de manière à posséder en profil conjugué à la courbure du premier bord rentrant 6 des mâchoires 3. Une telle configuration géométrique permet aux mâchoires tel que montré aux figures 8a-8b, d'assurer un verrouillage complet de l'ensemble couvercle-cuve. De manière avantageuse, la cuve 1 est pourvue d'un bord supérieur présentant un roulage externe 1b définissant une tranche inférieure contre laquelle vient en appui la face interne du second bord rentrant 7 de la mâchoire 3. De cette façon les mâchoires 3 maintiennent en position respective de verrouillage la cuve 1 et le couvercle 2 à l'encontre de tout déplacement relatif selon l'une quelconque des directions de l'espace.

Le couvercle 2 conforme à l'invention présente également dans sa partie centrale, une zone bombée 55 dont la concavité est tournée vers l'extérieur du récipient. Avantageusement la zone bombée 55 se présente sous la forme d'une calotte centrée sur l'axe de symétrie y-y' du couvercle 2. La présence de la zone bombée 55 permet en fonctionnement sous pression, d'obtenir une composante résultante des forces de pression agissant sur le couvercle qui provoque une réaction de rentrée des parties périphériques du bord du couvercle 2. De manière particulièrement avantageuse, la zone bombée 53 représente entre 40 et 60 % de la surface totale du couvercle.

Le couvercle 2 présente également une zone annulaire 54 joignant la zone bombée centrale 53 au roulage périphérique 53. La zone annulaire 54 présente une section transversale courbe dont la concavité est opposée à celle de la zone bombée centrale 55. La zone annulaire 54 peut en conséquence être assimilée à un galbe elliptique permettant une recomposition des forces de pression agissant sur les faces internes du couvercle 2. La zone annulaire 54 permet en particulier une recomposition majoritaire des forces de pression selon un sens horizontal dans les zones périphériques externes du couvercle. A l'opposé les forces de pression sont dirigées majoritairement selon un sens vertical dans les zones les plus proches du centre du couvercle 2. Le moment fléchissant sur le couvercle 2 est en conséquence maintenu à des valeurs proches de son minimum.

La variante de réalisation montrée à la figure 6 ne diffère des variantes précédentes que par des moyens de déverrouillage différents. A cet effet le bouton poussoir des variantes précédentes est remplacé en tant qu'organe de commande 41 par une manette 60 montée articulée par son extrémité supérieure 61 sur la barrette de liaison 8. Le montage de la manette 60 dans le boîtier de montage 11 permet une rotation de la manette 60 autour de sa partie médiane 62. L'actionnement par l'utilisateur de la partie inférieure 63 de la manette 60 permet à cette dernière, par rotation autour de la zone médiane 62, la commande du déplacement radial de chaque mâchoire 3.

Le fonctionnement du dispositif de verrouillage-déverrouillage conforme à l'invention est le suivant.

Chaque mâchoire 3 étant dans sa position fixe de déverrouillage correspondant à la position montrée aux figures 3 et 5, l'utilisateur positionne sans indexage le couvercle 2 sur la cuve 1. Dans cette position de pré-fermeture, le bord inférieur 45 du couvercle vient engager la pièce de butée 41. En effectuant une pression axiale dirigée selon l'axe x-x' en direction du fond du récipient, l'utilisateur assure alors l'effacement de la pièce de butée 41 dans l'évidement 42, ce qui permet aux mâchoires 3 d'être librement soumises à la force F générée par les moyens de rappel 16. Les mâchoires 3 viennent alors occuper leur position de verrouillage montrée aux figures 1, 4 et 8. Dans cette position les segments 3' assurent l'emprisonnement relatif du couvercle 2 sur la cuve 1 et inversement, au jeu relatif pré-existant (figure 8a) entre les bords rentrant 6, 7 d'une part et le bord roulé 52 et la lèvre rentrante 51 d'autre part. Lors de l'utilisation du récipient, la pression interne résultant de la cuisson développe sur les faces internes du couvercle 2 une pression résultante venant appliquer le bord périphérique 52 contre le bord rentrant 6 lequel développe une force réactive assurant le verrouillage (figure 8b). Dans ces conditions de fonctionnement aucune ouverture inopinée des mâchoires n'est possible, l'effort radial centrifuge nécessaire demandé étant trop important pour pouvoir d'une part surmonter la composante résultante de la pression interne, et les forces réactives résultant des formes conjuguées entre le bord rentrant 6 et le bord périphérique 52.

Lorsque la pression interne de cuisson est revenue à la pression atmosphérique, l'utilisateur assure l'ouverture du récipient par actionnement des boutons poussoirs qui permettent le déplacement radial centrifuge des mâchoires 3. La fin de course du bouton poussoir correspond à un éloignement radial suffisant des mâchoires 3 hors de la surface de l'évidement 42 permettant à la pièce de butée 41 de venir occuper sa position haute de blocage des mâchoires 3 correspondant à leur position de déverrouillage. L'utilisateur peut alors ouvrir le récipient et enlever le couvercle 2.

Il s'avère que l'utilisation de mâchoires radiales 3 permet un pré-positionnement du couvercle 2 sans indexage de position relativement à la cuve 1, et que les gestes induisant le verrouillage se limitent à une simple poussée axiale de la part de l'utilisateur sur le couvercle 2. De la même façon, l'ouverture du récipient fait également appel à un geste simple et facilement mémorisable, également axial et dirigé dans le même sens que la poussée axiale de fermeture. La mémorisation est donc grandement facilitée, et tout risque d'erreur d'actionnement est écarté.

A titre de variante de l'invention, il est bien évidemment possible d'inverser la cinématique du déplacement des mâchoires, et de monter ces dernières sur le couvercle 2, sans sortir pour autant du cadre de l'invention.

## Revendications

1. Dispositif de verrouillage-déverrouillage d'un couvercle (2) sur une cuve (1) pour former un récipient de cuisson, de préférence sous pression, comportant des mâchoires (3) de verrouillage montées mobiles et espacées le long de la circonférence du récipient, lesdites mâchoires (3) étant destinées à occuper une position de verrouillage relatif du couvercle (2) et de la cuve (1), et des moyens de déverrouillage (30) susceptibles d'agir sur les mâchoires (3) pour leur faire quitter leur position de verrouillage caractérisé en ce qu'il comporte :
- au moins deux mâchoires (3) montées élastiquement mobiles selon une direction radiale en considérant l'axe de symétrie (x-x') du récipient, par l'intermédiaire d'un moyen de rappel (16) entre une position fixe de déverrouillage à l'encontre du moyen de rappel (16) et une position de rappel correspondant à leur position de verrouillage,
- un moyen de blocage (40) des mâchoires (3) dans leur position fixe, ledit moyen étant escamotable pour occuper une position de déblocage dans laquelle les mâchoires (3) sont soumises librement à l'action du moyen de rappel (16),
- un moyen de déclenchement (30) apte à agir sur le moyen de blocage (40) pour lui faire occuper sa position de déblocage.

2. Dispositif selon la revendication 1 caractérisé en ce que les mâchoires (3) s'étendent sur une portion de longueur de la circonférence du récipient et présentent au moins sur un segment (3') de longueur une face (5) sensiblement parallèle aux parois du récipient, ladite face se terminant par un premier rebord rentrant (6) destiné à venir en appui sur le couvercle (2) ou sur la cuve (1) pour permettre le verrouillage.

3. Dispositif selon la revendication 2 caractérisé en ce que les mâchoires (3) comportent un second rebord rentrant (7) de manière à définir des segments (3') à section transversale en U destinés à venir enserrer le couvercle (2) et la cuve (1).

4. Dispositif selon la revendication 3 caractérisé en ce que chaque mâchoire (3) est pourvue de deux segments (3') à section transversale en U disposés aux deux extrémités de la mâchoire (3) et reliés entre eux par une barrette de liaison (8).

5. Dispositif selon l'une des revendications 1 à 4 caractérisé en ce que les mâchoires sont solidaires de la cuve (1).

6. Dispositif selon la revendication 5 caractérisé en ce que la cuve (1) est pourvue de poignées (4) à l'intérieur desquelles sont intégrées les mâchoires (3).

7. Dispositif selon l'une des revendications 1 à 6 caractérisé en ce que chaque mâchoire est montée élastiquement mobile par l'intermédiaire d'un moyen de rappel élastique (16) constitué de préférence d'au moins un ressort (15) de compression apte à exercer sur chaque mâchoire (3) une force de rappel (F) tendant à amener chaque mâchoire (3) en direction du centre du récipient.

8. Dispositif selon l'une des revendications 1 à 7 caractérisé en ce que les moyens de déverrouillage comportent au moins un organe de commande (30) apte à amener les mâchoires (3) hors de leur position de verrouillage pour leur faire occuper leur position fixe de déverrouillage.

9. Dispositif selon la revendication 8 caractérisé en ce que l'organe de commande (30) est constitué pour chaque mâchoire (3), d'un poussoir (31) monté de manière à coulisser selon une direction sensiblement normale au sens du déplacement des mâchoires (3), et possédant une partie active inférieure en forme de coin (31b) destinée lors de son coulissement à venir engager et repousser radialement vers l'extérieur du récipient, un étrier (35) solidaire de la mâchoire (3).

10. Dispositif selon la revendication 8 caractérisé en ce que l'organe de commande (30) est constitué d'une manette (60) articulée sur chaque mâchoire (3) par une extrémité (61) et montée à rotation pour être actionnée par l'autre extrémité (64) de manière à commander le déplacement radial de chaque mâchoire (3).

11. Dispositif selon l'une des revendications 1 à 8 caractérisé en ce que chaque mâchoire (3) est associé à un moyen de blocage (40) qui comporte une pièce de butée (41) escamotable montée mobile entre une position de blocage des mâchoires (3), et une position de déblocage.

12. Dispositif selon la revendication 11 caractérisé en ce que la pièce de butée (41) est montée mobile selon une direction sensiblement normale au sens de déplacement des mâchoires (3) dans un évidement (42) situé sous les mâchoires (3) dont l'ouverture s'étend dans le plan d'extension inférieur des mâchoires (3) de telle façon qu'en position de verrouillage des mâchoires (3) ces dernières recouvrent la pièce de butée (41) qui est escamotée dans l'évidement (42), et qu'en position de déverrouillage les mâchoires (3) soient en butée contre ladite pièce (41).

13. Dispositif selon la revendication 12 caractérisé en ce que chaque pièce de butée (41) est montée élastiquement mobile dans l'évidement (42) à l'encontre d'un ressort (43) pour venir occuper sa position active en partie hors de l'évidement (42), position dans laquelle la pièce de butée (41) maintient la mâchoire (3) en position de déverrouillage.

14. Dispositif selon l'une des revendications 1 à 13 caractérisé en ce que le moyen de déclenchement est constitué par le couvercle (2) du récipient.

15. Dispositif selon la revendication 14 caractérisé en ce que le couvercle (2) comporte un bord périphérique bombé (45) destiné à engager la butée escamotable (41) lors de la fermeture du couvercle (2).

16. Dispositif selon l'une des revendications 2 à 15 caractérisé en ce que le premier rebord rentrant (6) présente une courbure de concavité tournée vers le fond du récipient formant le rebord supérieur de la mâchoire (3), ladite courbure étant destinée à venir coopérer en position de verrouillage avec un bord roulé (52) de profil conjugué situé à la périphérie du couvercle.

17. Dispositif selon la revendication 16 caractérisé en ce que le couvercle de cuve présente dans sa partie centrale une zone bombée (55) dont la concavité est tournée vers l'extérieur du récipient.

18. Dispositif selon la revendication 17 caractérisé en ce que la zone bombée (55) représente entre 40 et 60 % de la surface du couvercle (2).

19. Dispositif selon la revendication 17 ou 18 caractérisé en ce que le couvercle (2) présente une zone annulaire (54) joignant la zone bombée centrale à un roulage périphérique (53) formant à partir du bord roulé (52) une rainure de concavité tournée vers l'extérieur du couvercle (2), ladite zone annulaire (54) présentant une section transversale courbe dont la concavité est opposée à celle de la zone bombée centrale (55).

20. Autocuiseur équipé d'un dispositif selon l'une des revendications 1 à 19.

## Claims

1. A device for locking and unlocking a lid (2) on a bowl (1) to form a receptacle for cooking, preferably under pressure, the device comprising locking jaws (3) that are moveably mounted and spaced apart around the circumference of the receptacle, said jaws (3) being designed to occupy a position for locking the lid (2) relative to the bowl (1), and unlocking means (30) suitable for acting on the jaws (3) to make them leave the locking position, the device being characterized in that it includes:
· at least two jaws (3) mounted to move resiliently by the intermediary of return means (16) in a radial direction relative to the axis of symmetry (x-x') of the receptacle between a fixed, unlocking position against the return means (16), and a return position corresponding to the locking position,
· stop means (40) for holding the jaws (3) in the fixed position, said stop means being retractable to occupy a release position in which the jaws (3) are freely subjected to the action of the return means (16), and
· release means (30) suitable for acting on the stop means (40) to cause it to occupy its release position.

2. A device according to claim 1, characterized in that the jaws (3) extend over a fraction of the circumference of the receptacle each presenting, at least on a length segment (3'), a face (5) substantially parallel to the walls of the receptacle, said face being terminated by a first inwardly-directed rim (6) for bearing against the lid (2) or against the bowl (1) to enable locking.

3. A device according to claim 2, characterized in that the jaws (3) include respective second inwardly-directed rims (7) to define segments (3') of channel-shaped cross-section designed to encompass the lid (2) and the bowl (1).

4. A device according to claim 3, characterized in that each jaw (3) is provided with two segments (3') of channel-shaped cross-section disposed at opposite ends of the jaw (3) and connected together by a link bar (8).

5. A device according to any one of claims 1 to 4, characterized in that the jaws are secured to the bowl (3).

6. A device according to claim 5, characterized in that the bowl (1) is provided with handles (4) with the jaws (3) being integrated therein.

7. A device according to any one of claims 1 to 6, characterized in that each jaw is mounted to move resiliently by the intermediary of resilient return means (16) preferably constituted by at least one compression spring (15) suitable for exerting a return force (F) on each jaw (3) tending to urge each jaw (3) towards the center of the receptacle.

8. A device according to any one of claims 1 to 7, characterized in that the unlocking means include at least one control member (30) suitable for bringing the jaws (3) away from the locking position to cause them to occupy the fixed, unlocking position.

9. A device according to claim 8, characterized in that the control member (30) for each jaw (3) is constituted by a pushbutton (31) mounted to slide in a direction that is substantially normal to the displacement direction of the jaws (3), and possessing a wedge-shaped active bottom portion (31b) designed during sliding to engage a bracket (35) secured to the jaw (3) and push it radially outwardly relative to the receptacle.

10. A device according to claim 8, characterized in that the control member (30) is constituted by a lever (60) hinged on each jaw (3) at one end (61) and rotatably mounted to be actuated via its other end (64) so as to control radial displacement of each jaw (3).

11. A device according to any one of claims 1 to 8, characterized in that each jaw (3) is associated with stop means (40) comprising a retractable stop piece (41) mounted to move between a position in which it stops the jaws (3) and a release position.

12. A device according to claim 11, characterized in that the stop piece (41) is mounted in a recess (42) to move in a direction that is substantially normal to the displacement direction of the jaws (3), which recess (42) is situated beneath the jaws (3) and has its opening lying in the same plane as the bottom of the jaws (3) so that when the jaws (3) are in the locking position, they overlie the stop piece (41) which is retracted into the recess (42), and when the jaws (3) are in the unlocking position they are in abutment against said stop piece (41).

13. A device according to claim 12, characterized in that each stop piece (41) is resiliently mounted to move in its recess (42) against a spring (43) to take up its active position where part of the stop piece is outside the recess (42), in which position the stop piece (41) holds the jaw (3) in the unlocking position.

14. A device according to any one of claims 1 to 13, characterized in that the release means is constituted by the lid (2) of the receptacle.

15. A device according to claim 14, characterized in that the lid (2) has a curved peripheral edge (45) designed to engage the retractable stop (41) while the lid (2) is being closed.

16. A device according to any one of claims 2 to 15, characterized in that the first inwardly-directed rim (6) is curved with its concave side facing towards the bottom of the receptacle and forms the top rim of the jaw (3), said curvature being designed to co-operate in the locking position with a rolled edge (52) of complementary profile situated at the periphery of the lid.

17. A device according to claim 16, characterized in that the lid of the bowl has a depression (55) in its central portion with the concave side thereof facing towards the outside of the receptacle.

18. A device according to claim 17, characterized in that the depression (55) occupies 40% to 60% of the area of the lid (2).

19. A device according to claim 17 or 18, characterized in that the lid (2) has an annular zone (54) connecting the central depression to a peripheral rolled portion (53) forming a groove extending from the rolled edge (52) and having its concave side facing towards the outside of the lid (2), said annular zone (54) having a curved cross-section whose concave side faces in the opposite direction of the central depression (55).

20. A pressure cooker fitted with a device according to any one of claims 1 to 19.

## Patentansprüche

1. Vorrichtung zum Verriegeln/Entriegeln eines Deckels (2) an einem Topf (1), um einen Kochbehälter, vorzugsweise Druckkochbehälter, zu bilden, mit Verriegelungs-Klemmbacken (3), die bewegbar und entlang dem Umfang des Behälters voneinander beabstandet angebracht sind, wobei die Klemmbacken (3) dafür vorgesehen sind, eine Stellung des Verriegelns des Deckels (2) an dem Topf (1) einzunehmen, sowie Entriegelungsmitteln (30), die auf die Klemmbacken (3) einwirken können, damit diese ihre Verriegelungsstellung verlassen, dadurch gekennzeichnet, daß sie enthält:
- wenigstens zwei Klemmbacken (3), die entlang einer bezüglich der Symmetrieachse (x-x') des Behälters radialen Richtung mittels eines Rücksetzmittels (16) zwischen einer festen Entriegelungsstellung entgegen dem Rücksetzmittel (16) und einer Rücksetzstellung, die ihrer Verriegelungsstellung entspricht, elastisch bewegbar sind;
- ein Mittel (40) zum Blockieren der Klemmbacken (3) in deren fester Stellung, wobei das Mittel einziehbar ist, um eine Lösestellung einzunehmen, in der die Klemmbacken (3) der Wirkung des Rücksetzmittels (16) frei ausgesetzt sind;
- ein Auslösemittel (30), das in der Lage ist, auf das Blokkiermittel (40) einzuwirken, damit dieses seine Lösestellung einnimmt.

2. Vorrichtung nach Anspruch 1, dadurch gekennzeichnet, daß die Klemmbacken (3) sich über einen Teil der Länge des Umfanges des Behälters erstrecken und wenigstens auf einem Segment (3') der Länge eine Fläche (5) aufweisen, die im wesentlichen parallel zu den Wänden des Behälters ist, wobei die Fläche in einem ersten umgebogenen Rand (6) endet, der dafür vorgesehen ist, an dem Deckel (2) oder an dem Topf (1) in Anlage zu gelangen, um das Verriegeln zu ermöglichen.

3. Vorrichtung nach Anspruch 2, dadurch gekennzeichnet, daß die Klemmbacken (3) einen zweiten umgebogenen Rand (7) aufweisen, um Segmente (3') mit U-förmigem Querschnitt zu bilden, die dafür vorgesehen sind, den Deckel (2) und den Topf (1) einzuspannen.

4. Vorrichtung nach Anspruch 3, dadurch gekennzeichnet, daß jede Klemmbacke (3) mit zwei Segmenten (3') mit U-förmigem Querschnitt versehen ist, die an den beiden Enden der Klemmbacke (3) angeordnet und miteinander durch einen Verbindungsstab (8) verbunden sind.

5. Vorrichtung nach einem der Ansprüche 1 bis 4, dadurch gekennzeichnet, daß die Klemmbacken fest mit dem Topf (1) verbunden sind.

6. Vorrichtung nach Anspruch 5, dadurch gekennzeichnet, daß der Topf mit Griffen (4) versehen ist, in deren Inneren die Klemmbacken (3) integriert sind.

7. Vorrichtung nach einem der Ansprüche 1 bis 6, dadurch gekennzeichnet, daß jede Klemmbacke durch ein elastisches Rücksetzmittel (16) elastisch bewegbar angebracht ist, das vorzugsweise durch wenigstens eine Druckfeder (15) gebildet ist, die auf jede Klemmbacke (3) eine Rücksetzkraft (F) ausüben kann, welche jede Klemmbacke (3) in Richtung der Mitte des Behälters zurückzustellen sucht.

8. Vorrichtung nach einem der Ansprüche 1 bis 7, dadurch gekennzeichnet, daß die Entriegelungsmittel wenigstens ein Steuerorgan (30) aufweisen, das die Klemmbacken (3) aus deren Verriegelungsstellung herausbewegen kann, damit diese ihre feste Entriegelungsstellung einnehmen.

9. Vorrichtung nach Anspruch 8, dadurch gekennzeichnet, daß das Steuerorgan (30) für jede Klemmbacke (3) durch einen Drücker (31) gebildet ist, der so angebracht ist, daß er sich entlang einer zur Verstellrichtung der Klemmbacken (3) im wesentlichen senkrechten Richtung bewegt, und einen unteren aktiven, keilförmigen Abschnitt (31b) aufweist, der dafür vorgesehen ist, bei seiner Bewegung an einem fest mit der Klemmbacke (3) verbundenen Bügel (35) anzugreifen und diesen relativ zum Gehäuse radial nach außen zu drücken.

10. Vorrichtung nach Anspruch 8, dadurch gekennzeichnet, daß das Steuerorgan (30) durch ein Bedienelement (60) gebildet ist, das an jeder Klemmbacke (3) mittels eines Endes (61) angelenkt und drehbar angebracht ist, um von dem anderen Ende (64) betätigt zu werden, so daß die radiale Verstellung jeder Klemmbacke (3) gesteuert wird.

11. Vorrichtung nach einem der Ansprüche 1 bis 8, dadurch gekennzeichnet, daß jede Klemmbacke (3) einem Blockiermittel (40) zugeordnet ist, das ein einziehbares Anschlagteil (41) aufweist, das zwischen einer Stellung des Blockierens der Klemmbacken (3) und einer Lösestellung bewegbar angebracht ist.

12. Vorrichtung nach Anspruch 11, dadurch gekennzeichnet, daß das Anschlagteil (41) entlang einer zur Verstellrichtung der Klemmbacken (3) im wesentlichen senkrechten Richtung bewegbar in einer Aussparung (42) angebracht ist, die unter den Klemmbacken (3) angeordnet ist und deren Öffnung sich in der unteren Erstreckungsebene der Klemmbacken (3) erstreckt, so daß die Klemmbacken (3) in ihrer Verriegelungsstellung das Anschlagteil (41) abdecken, das in die Aussparung (42) eingezogen ist, und daß die Klemmbacken (3) in der Entriegelungsstellung in Anlage an dem Teil (41) sind.

13. Vorrichtung nach Anspruch 12, dadurch gekennzeichnet, daß jedes Anschlagteil (41) in der Aussparung (42) elastisch entgegen einer Feder (43) bewegbar angebracht ist, um seine aktive, teilweise außerhalb der Aussparung (42) befindliche Stellung einzunehmen, in der das Anschlagteil (41) die Klemmbacke (3) in der Entriegelungsstellung hält.

14. Vorrichtung nach einem der Ansprüche 1 bis 13, dadurch gekennzeichnet, daß das Auslösemittel durch den Deckel (2) des Behälters gebildet ist.

15. Vorrichtung nach Anspruch 14, dadurch gekennzeichnet, daß der Deckel (2) einen gewölbten Umfangsrand (45) aufweist, der dafür vorgesehen ist, an dem einziehbaren Anschlag (41) beim Schließen des Deckels (2) anzugreifen.

16. Vorrichtung nach einem der Ansprüche 2 bis 15, dadurch gekennzeichnet, daß der erste umgebogene Rand (6) eine Krümmung aufweist, deren Konkavität zum Boden des Behälters gerichtet ist und die den oberen Rand der Klemmbacke (3) bildet, wobei die Krümmung dafür vorgesehen ist, in der Verriegelungsstellung mit einem gerollten Rand (55) mit konjugiertem Profil zusammenzuwirken, der an dem Umfang des Deckels angeordnet ist.

17. Vorrichtung nach Anspruch 16, dadurch gekennzeichnet, daß der Topfdeckel in seinem Mittelabschnitt eine gewölbte Zone (55) aufweist, deren Konkavität zum Außenraum des Behälters gerichtet ist.

18. Vorrichtung nach Anspruch 17, dadurch gekennzeichnet, daß die gewölbte Zone (55) zwischen 40 und 60 % der Oberfläche des Deckels (2) darstellt.

19. Vorrichtung nach Anspruch 17 oder Anspruch 18, dadurch gekennzeichnet, daß der Deckel (2) eine ringförmige Zone (54) aufweist, welche die gewölbte Mittelzone mit einem Umfangs-Rollbereich (53) verbindet, der ausgehend von dem gerollten Rand (52) eine Nut bildet, deren Konkavität zum Außenraum des Deckels (2) gerichtet ist, wobei die ringförmige Zone (54) einen gekrümmten Querschnitt aufweist, dessen Konkavität entgegengesetzt zu derjenigen der gewölbten Mittelzone (55) ist.

20. Dampfkochtopf, versehen mit einer Vorrichtung nach einem der Ansprüche 1 bis 19.
